# EUROPÄISCHE PATENTSCHRIFT

(11) **EP 3 448 627 B1**
(45) Veröffentlichungstag und Bekanntmachung des Hinweises auf die Patenterteilung: **20.04.2022**
(21) Anmeldenummer: 17719288.7
(22) Anmeldetag: 27.04.2017
(51) Int. Cl.: B25J 9/12, B25J 17/02, B25J 19/00, B25J 9/10, B25J 19/06

(54) **MOTORISIERTES GELENK FÜR EINEN PROGRAMMIERBAREN BEWEGUNGSAUTOMATEN**
MOTORIZED JOINT FOR A PROGRAMMABLE MOVING MACHINE
ARTICULATION MOTORISÉE POUR UN ROBOT MANIPULATEUR PROGRAMMABLE

(30) Priorität: 27.04.2016 LU 93047
(43) Veröffentlichungstag der Anmeldung: 06.03.2019
(73) Patentinhaber: Ovalo GmbH, 65555 Limburg (DE)
(72) Erfinder: GILGES, Siegmar, 65307 Bad Schwalbach (DE)
(74) Vertreter: Hoffmann, Jürgen
(86) Internationale Anmeldenummer: PCT/EP2017/060056
(87) Internationale Veröffentlichungsnummer: WO 2017/186849

(56) Entgegenhaltungen:
- JP-A- H06 320 471
- US-A- 5 155 423
- US-A1- 2016 089 780

## Beschreibung

Die Erfindung betrifft ein motorisiertes Gelenk zum Verbinden von zwei relativ zueinander beweglichen Trägern eines programmierbaren Bewegungsautomaten, das einen Antriebsmotor und ein dem Antriebsmotor triebtechnisch nachgeschaltetes Getriebe sowie eine Feststellvorrichtung aufweist, wobei die Feststellvorrichtung dazu ausgebildet und angeordnet ist, unmittelbar eine Abtriebswelle des Antriebsmotors oder ein drehfest mit der Abtriebswelle des Antriebsmotors verbundenes Sperrmittel zu arretieren und die Abtriebswelle mittels einer Verbindungskupplung drehfest mit einer Antriebswelle des Getriebes verbunden ist, wobei die Verbindungskupplung bei Auftreten eines Drehmomentes zwischen der Abtriebswelle des Antriebsmotors und der Antriebswelle des Getriebes über einem vorgegebenen oder vorgebbaren Wert eine Relativbewegung der Abtriebswelle zur Antriebswelle zulässt.

Aus US 8,614,559 B2 ist ein programmierbares Robotersystem bekannt. Das Robotersystem beinhaltet einen Roboter mit einer Anzahl von einzelnen Armabschnitten, wobei benachbarte Armabschnitte jeweils durch ein Gelenk miteinander verbunden sind. Das Robotersystem umfasst ferner in wenigstens einem Gelenk einen steuerbaren Antrieb sowie ein Steuersystem zum Steuern der Antriebe. Das Robotersystem weist außerdem eine Benutzerschnittstelle auf, über die das Robotersystem programmiert werden kann. Das Gelenk weist ein Gehäuse und einen in dem Gehäuse angeordneten Motor mit einer Motorwelle auf, die relativ zu dem Gehäuse rotiert. In dem Gehäuse befindet sich außerdem eine Sicherheitsbremse, die eine mittels eines Elektromagneten aktivierbare Sperrklinke aufweist. Die Sperrklinke greift in der aktivierten Stellung in ein unmittelbar mit der Motorwelle reibschlüssig verbundenes Bauteil ein.

Aus JP H06 320471 A ist ein Gelenk für einen Manipulator bekannt. Das Gelenk beinhaltet einen Motor, der ein Ausgangsdrehmoment erzeugt, und ein Reduktionsgetriebe zum Verstärken eines Ausgangsdrehmoments des Motors. Das Gelenk weist außerdem eine Bremse auf, die an den Motor angekoppelt ist. Für den Fall, dass ein übermäßiges Drehmoment auf der angetriebenen Seite auftritt, ist ein Reibmechanismus vorhanden, der den Motor und die Bremse vor einer Beschädigung schützt.

Es ist die Aufgabe der vorliegenden Erfindung, ein motorisiertes Gelenk für einen programmierbaren Bewegungsautomaten anzugeben, das auf einfache Weise ein zuverlässiges Arretieren der Träger relativ zueinander, insbesondere in einem Fehlerfall, erlaubt.

Die Aufgabe wird durch ein gattungsgemäßes motorisiertes Gelenk gelöst, das dadurch gekennzeichnet ist, dass
a. die Verbindungskupplung eine stirnseitige Ausnehmung in der Abtriebswelle aufweist, in der ein Ende der Antriebswelle mittels eines Klemmbauteils, das als gewelltes und/oder elastisches und/oder zylinderförmig gebogenes Band oder als geschlitzter Ring ausgebildet ist, kraftschlüssig verankert ist, oder dass
b. die Verbindungskupplung eine stirnseitige Ausnehmung in der Antriebswelle aufweist, in der ein Ende der Abtriebswelle mittels eines Klemmbauteils, das als gewelltes und/oder elastisches und/oder zylinderförmig gebogenes Band oder als geschlitzter Ring ausgebildet ist, kraftschlüssig verankert ist.

In erfindungsgemäßer Weise wurde erkannt, dass die Gelenke des aus der eingangs genannten Patentschrift US 8,614,559 B2 bekannten, programmierbaren Robotersystems den Nachteil haben, dass die Antriebsrotation des Antriebsmotors nicht in jedem Fall zuverlässig mittels der Sicherheitsbremse unterbunden werden kann. Vielmehr kann sich die Abtriebswelle auch nach Aktivierung der Sicherheitsbremse unter Überwindung von deren Reibkraft noch weiter drehen. Die vorliegende Erfindung räumt dieses Problem vollständig aus. Dies jedoch vorteilhafter Weise derart, dass eine Beschädigung der im Kraftfluss der Abtriebswelle nachfolgenden Bauteile durch Drehmomentspitzen dennoch wirkungsvoll vermieden ist, was im Folgenden noch im Detail erläutert ist.

Der vorgegebene Wert entspricht vorzugsweise dem maximal zulässigen Betriebsdrehmoment, das zwischen der Abtriebswelle des Antriebsmotors und der Antriebswelle des Getriebes auftreten darf. Der Wert kann insbesondere auch unterhalb dieses Wertes liegen, um ein Sicherheitspolster zu implementieren. Insbesondere ist der vorgegebene Wert vorzugsweise derart gewählt, dass eine Beschädigung des Gelenks und/oder des Getriebes ausgeschlossen ist.

Die Erfindung hat, was weiter unten im Detail erläutert ist, den weiteren ganz besonderen Vorteil, dass das Gelenk zwei relativ zueinander bewegliche Gehäuseteile aufweist, wobei der Antriebsmotor vormontiert in einem der Gehäuseteile angeordnet ist und das Getriebe vormontiert in dem anderen Gehäuseteil angeordnet ist. Eine Kopplung des Getriebes an den Antriebsmotor kann bei einer solchen Ausführung während der Herstellung einfach mittels der Verbindungskupplung realisiert werden, was den gesamten Herstellvorgang des Gelenks erheblich vereinfacht.

Wie bereits erwähnt, ist es insbesondere möglich, dass die Feststellvorrichtung unmittelbar an der Abtriebswelle angreift, um diese zu arretieren. Beispielsweise kann die Abtriebswelle eine Rastausnehmung aufweisen, in die das freie Ende eines, insbesondere radial beweglichen, Sperrenstifts eingreifen kann. Die Abtriebswelle kann insbesondere mehrere Rastausnehmungen aufweisen, um ein Eingreifen des Sperrenstifts in unterschiedlichen Drehstellungen zu ermöglichen.

Wie ebenfalls bereits erwähnt, ist es alternativ auch möglich, dass die Feststellvorrichtung unmittelbar an einem drehfest mit der Abtriebswelle des Antriebsmotors verbundenen Sperrmittel angreift, um diesen und damit auch die Abtriebswelle zu arretieren. Hierbei kann insbesondere vorteilhaft vorgesehen sein, dass die drehfeste Verbindung der Abtriebswelle des Antriebsmotors mit dem Sperrmittel eine Formschlussverbindung und/oder eine Stoffschlussverbindung ist. Die drehfeste Verbindung der Abtriebswelle des Antriebsmotors mit dem Sperrmittel kann alternativ auch als eine Kraftschlussverbindung ausgeführt und derart ausgebildet sein, dass das Verbindungselement die Relativbewegung der Abtriebswelle zur Antriebswelle zulässt, bevor es zu einem Durchrutschen der Kraftschlussverbindung kommt.

Unabhängig von der Art der Verbindung sind die Abtriebswelle des Antriebsmotors und das Sperrmittel bei einer besonderen Ausführung koaxial zueinander angeordnet. Vorzugsweise sind auch die Abtriebswelle des Antriebsmotors und der Antriebswelle des Getriebes koaxial zueinander angeordnet.

Erfindungsgemäß weist die Verbindungskupplung eine stirnseitige Ausnehmung in der Abtriebswelle auf, in der ein Ende der Antriebswelle mittels eines Klemmbauteils kraftschlüssig verankert ist. Alternativ kann erfindungsgemäß umgekehrt auch vorgesehen sein, dass die Verbindungskupplung eine stirnseitige Ausnehmung in der Antriebswelle aufweist, in der ein Ende der Abtriebswelle mittels eines Klemmbauteils kraftschlüssig verankert ist. Das Klemmbauteil ist als gewelltes und/oder elastisches und/oder zylinderförmig gebogenes Band oder als geschlitzter Ring ausgebildet.

Bei einer besonderen Ausführung weist die Abtriebswelle oder das drehfest mit der Abtriebswelle verbundene Sperrmittel wenigstens ein Formschlussmittel auf, das im zugeschalteten Zustand der Feststellvorrichtung formschlüssig mit einem relativ zu einem Gehäuse oder einem Chassis drehfesten Gegenformschlussmittel zusammen wirkt.

Das Sperrmittel kann vorteilhaft, beispielsweise als Ring, koaxial zu dem abzubremsenden Getriebebauteil angeordnet sein.

Das Sperrmittel kann als Formschlussmittel beispielsweise wenigstens eine Ausnehmung aufweisen, in die das Gegenformschlussmittel, beispielsweise in Form eines ausfahrbaren Sperrenstiftes, eingreifen kann. In vorteilhafter Weise kann das Sperrmittel mehrere Formschlussmittel, beispielsweise mehrere Ausnehmungen, aufweisen, die derart angeordnet sind, dass ein Eingreifen des Gegensperrmittels in unterschiedlichen Drehstellungen der Abtriebswelle ermöglicht ist.

Bei einer ganz besonders vorteilhaften Ausführung ist das Formschlussmittel als wenigstens eine Rastausnehmung oder als radial ausgerichtete Rastausnehmung ausgebildet, wobei das Gegenformschlussmittel einen radial bewegbaren Sperrenstift aufweist, dessen freies Ende in zugeschaltetem Zustand der Feststellvorrichtung in eine Rastausnehmung des Formschlussmittels eingreift.

Bei einer ganz besonders vorteilhaften Ausführung ist das Getriebe als Spannungswellengetriebe ausgebildet. Eine solche Ausführung hat den ganz besonderen Vorteil, dass ein besonders präzises Einstellen der beweglichen Träger relativ zueinander ermöglicht ist. Hierbei wird vorteilhaft ausgenutzt, dass Spannungswellengetriebe spielfrei sind und daher die vom Antriebsmotor erzeugten Drehmomente, insbesondere auch bei einer Richtungsumkehr, unmittelbar in eine entsprechende Relativbewegung der Träger übersetzt werden können. Alternativ kann das Getriebe beispielsweise als Planetengetriebe oder als Zykloidgetriebe ausgebildet sein.

Bei einer besonderen Ausführung weist das Gelenk zwei relativ zueinander bewegliche Gehäuseteile auf, wobei der Antriebsmotor in einem der Gehäuseteile angeordnet ist und das Getriebe in dem anderen Gehäuseteil angeordnet ist. Alternativ oder zusätzlich kann auch vorgesehen sein, dass ein Teil des Getriebes in einem der Gehäuseteile angeordnet ist und ein anderer Teil des Getriebes in dem anderen Gehäuseteil angeordnet ist, oder dass die Feststellvorrichtung in demselben Gehäuseteil angeordnet ist, wie das Getriebe oder wenigstens wie das unmittelbar abzubremsende Bauteil des Getriebes. Diese Ausführungen haben den besonderen Vorteil, dass die Gehäuseteile symmetrisch und/oder baugleich und/oder gleich groß ausgebildet sein können. Insbesondere ist es nicht erforderlich, dass einer der Gelenkteile besonders klobig ausgebildet ist, weil er sämtliche Elemente sowohl des Antriebsmotors, als auch des Getriebes und der Feststellvorrichtung aufnehmen muss.

Bei einer besonderen Ausführung ist die Feststellvorrichtung derart ausgebildet, dass der jeweils gewählte Schaltzustand auch dann zuverlässig erhalten bleibt, wenn die Stromversorgung ausfällt oder abgeschaltet ist. Beispielsweise kann die Feststellvorrichtung hierzu eine Permanentmagnetanordnung aufweisen, die ein Verriegelungsbauteil nach einem Umschaltvorgang, bei dem von der Freigabestellung in die Verriegelungsstellung geschaltet wurde, in der Verriegelungsstellung hält und die das Verriegelungsbauteil nach einem Umschaltvorgang, bei dem von der Verriegelungsstellung in die Freigabestellung geschaltet wurde, in der Freigabestellung hält, wobei die Umschaltvorrichtung bei einem Umschaltvorgang dem von der Permanentmagnetanordnung verursachten Magnetfeld ein Umschaltmagnetfeld überlagert.

Eine solche Feststellvorrichtung hat den Vorteil, dass sie unabhängig von einer Stromversorgung bistabil ist, weil ein eingestellter Schaltzustand (Verriegelungsstellung oder Freigabestellung) von der Permanentmagnetanordnung zuverlässig solange erhalten wird, bis das Verriegelungsbauteil in den jeweils anderen Schaltzustand umgeschaltet wird.

Ein ganz besonderer Vorteil einer solchen Ausführung besteht darin, dass die Ebenen, innerhalb denen sich die Längsmittelachsen der Träger bewegen, einen geringeren Abstand zueinander aufweisen können. Dies hat den weiteren besonderen Vorteil, dass im Betrieb wenigstens auf einen der Träger ein geringeres Torsionsmoment einwirkt. Der Träger kann daher filigraner und/oder bauraumsparender dimensioniert werden.

Insbesondere kann ein Gehäuseteil dazu ausgebildet und angeordnet sein, starr direkt oder indirekt mit einem der Träger verbunden zu werden, während das andere Gehäuseteil dazu ausgebildet und angeordnet ist, starr mit dem anderen Träger verbunden zu werden. Es ist alternativ auch möglich, dass ein Gehäuse eines ersten Trägers zusätzlich auch als ein erstes Gehäuseteil fungiert und/oder dass ein Gehäuse eines zweiten Trägers zusätzlich auch als zweites Gehäuseteil fungiert.

Bei einer besonderen Ausführung ist das Gelenk dazu ausgebildet, zwei Träger derart zu verbinden, dass die Ebene, in der sich einer der Träger bewegt, und die Ebene, in der sich der andere Träger bewegt, stets parallel zueinander angeordnet sind. Bei einer anderen Ausführung ist das Gelenk dazu ausgebildet, zwei Träger derart zu verbinden, dass die Ebene, in der sich einer der Träger bewegt, und der andere Träger stets senkrecht zueinander angeordnet sind.

Insbesondere kann das Gelenk als Scharniergelenk ausgebildet sein. Unter einem Scharniergelenk wird ein Gelenk verstanden, das eine Drehbewegung in, insbesondere ausschließlich, einem Freiheitsgrad zulässt.

Von besonderem Vorteil ist ein programmierbarer Bewegungsautomat mit zwei Trägern, die mittels eines erfindungsgemäßen motorisierten Gelenks relativ zueinander beweglich verbunden sind. Hierbei kann insbesondere vorteilhaft vorgesehen sein, dass einer der Träger direkt oder indirekt drehfest mit einem Stator des Antriebsmotors und/oder einem Antriebsmotorgehäuse des Antriebsmotors verbunden ist, während der andere der Träger drehfest an das Abtriebselement des Getriebes angekoppelt ist.

Die zwei mittels des motorisierten Gelenks beweglich verbundenen Träger können beispielsweise Teil eines Roboterarmes sein.

In der Zeichnung ist der Erfindungsgegenstand beispielhaft und schematisch dargestellt und wird anhand der Figuren nachfolgend beschrieben, wobei gleiche oder gleich wirkende Elemente auch in unterschiedlichen Ausführungsbeispielen zumeist mit denselben Bezugszeichen versehen sind. Dabei zeigen:
Fig. 1 ein erstes Ausführungsbeispiel eines motorisierten Gelenks zum Verbinden von zwei relativ zueinander beweglichen Trägern, und
Fig. 2 ein zweites Ausführungsbeispiel eines motorisierten Gelenks zum Verbinden von zwei relativ zueinander beweglichen Trägern.

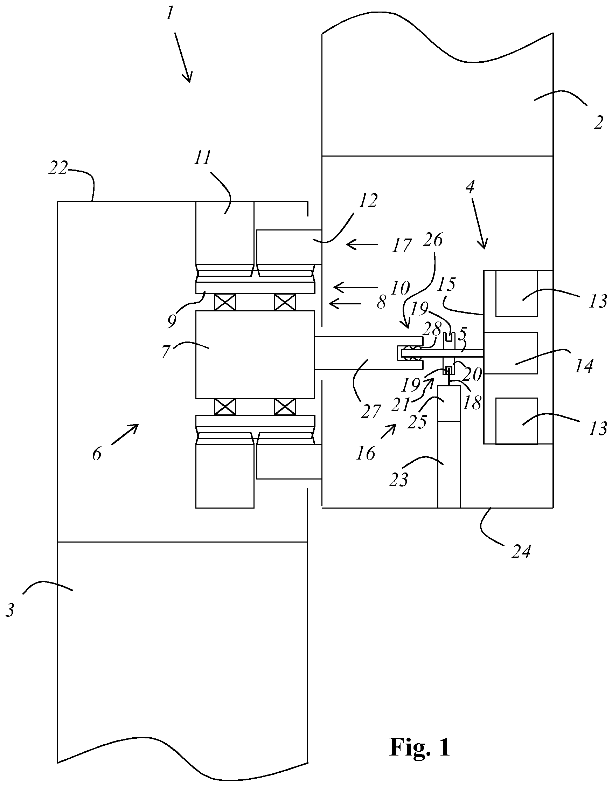

Figur 1 zeigt ein erstes Ausführungsbeispiel eines motorisierten Gelenks 1 zum gelenkigen Verbinden eines ersten Trägers 2 mit einem zweiten Träger 3 eines programmierbaren Bewegungsautomaten. Das motorisierte Gelenk 1 beinhaltet einen Antriebsmotor 4 mit einer Abtriebswelle 5, sowie ein dem Antriebsmotor 4 triebtechnisch nachgeschaltes Getriebe 6. Das Getriebe 6 ist als Spannungswellengetriebe ausgebildet.

Das motorisierte Gelenk 1 weist ein erstes Gehäuseteil 24 und ein zweites Gehäuseteil 22 auf. Das erste Gehäuseteil 24 ist starr mit dem ersten Träger 2 verbunden, während das zweite Gehäuseteil 22 starr mit dem zweiten Träger 3 verbunden ist. Es ist alternativ auch möglich, dass ein Gehäuse des ersten Trägers zusätzlich auch als erstes Gehäuseteil 24 fungiert und/oder dass ein Gehäuse des zweiten Trägers zusätzlich auch als zweites Gehäuseteil 22 fungiert.

Bei diesem Ausführungsbeispiel ist der Antriebsmotor 4 in dem ersten Gehäuseteil 24 angeordnet, während das Getriebe 6 in dem zweiten Gehäuseteil 22 angeordnet ist.

Das motorisierte Gelenk 1 weist außerdem eine Feststellvorrichtung 16 auf, die dazu ausgebildet und angeordnet ist, unmittelbar eine Abtriebswelle 5 oder ein drehfest mit der Abtriebswelle 5 des Antriebsmotors 4verbundenes Sperrmittel 20 zu arretieren. Die Feststellvorrichtung 16 kann insbesondere dazu dienen, das Gelenk beispielsweise im Notfall und/oder im Reparaturfall zu versteifen. Das Sperrmittel 20 ist als Sperrring 21 ausgebildet und form- und/oder stoffschlüssig mit der Abtriebswelle 5 verbunden. In der Sperrstellung greift ein radial beweglicher Sperrenstift 18 in eine Rastausnehmung 19 des Sperrmittels 20 ein. Der Sperrenstift 18 kann mittels eines Hubmagneten 25 in radialer Richtung bewegt werden. Zum Lösen der Feststellvorrichtung 16 wird das freie Ende des Sperrenstiftes 18 radial aus der Rastausnehmung 19 heraus bewegt. Das Sperrmittel 20 weist auf seinem Außenumfang verteilt mehrere Rastausnehmungen 19 auf, so dass ein Eingreifen des Sperrenstiftes 18 in unterschiedlichen Drehstellungen ermöglicht ist. Die Feststellvorrichtung 16 ist mittels eines Halters 23 drehfest mit dem ersten Gehäuseteil 24 verbunden.

Die Abtriebswelle 5 ist mittels einer Verbindungskupplung 26 drehfest mit einer Antriebswelle 27 des Getriebes 6 verbunden. Dies derart, dass die Verbindungskupplung 26 bei Auftreten eines Drehmomentes zwischen der Abtriebswelle 5 des Antriebsmotors 4 und der Antriebswelle 27 des Getriebes 6 über einem vorgegebenen oder vorgebbaren Wert eine Relativbewegung der Abtriebswelle 5 zur Antriebswelle 27 zulässt. Die Verbindungskupplung stellt eine reibschlüssige Verbindung her und ist in der Weise realisiert, dass die Antriebswelle 27 eine stirnseitige Ausnehmung aufweist, in der ein Ende der Antriebswelle 5 mittels eines Klemmbauteils 28 kraftschlüssig verankert ist. Das Klemmbauteil 28 ist als gewelltes und zylinderförmig gebogenes Blechband ausgebildet.

Das Getriebe 6 weist ein drehfest mit der Antriebswelle 27 verbundenes Antriebselement 7, nämlich einen Wellengenerator auf. Der Wellengenerator ist mittels eines radialflexiblen Wälzlagers 8 in einer radialflexiblen, außenverzahnten Büchse 9 gelagert, die ein Zwischenelement 10 des Getriebes 6 bildet. Das Antriebselement 7 ist elliptisch ausgebildet und überträgt seine elliptische Form über das radialflexible Wälzlager 8 auf die radialflexible außenverzahnte Büchse 9, die auf einander gegenüberliegenden Seiten entlang der Hochachse der Ellipse in Zahneingriff mit einem ersten, starren, innenverzahnten Stützring 11 steht. Der erste Stützring 11 ist über das zweite Gehäuseteil 22 drehfest mit dem zweiten Träger 3 verbunden. Der erste Stützring 11 kann insbesondere dieselbe Zähnezahl aufweisen, wie die radialflexible außenverzahnte Büchse 9.

Darüber hinaus weist das Getriebe 6 einen zweiten starren, innenverzahnten Stützring 12 auf, der ebenfalls in Zahneingriff mit der radialflexiblen außenverzahnten Büchse 9 steht. Der zweite Stützring 12 weist eine höhere Anzahl von Zähnen auf, als die radialflexible außenverzahnte Büchse 9, so dass es bei einer Drehung des Antriebselements 7 automatisch zu einer Relativdrehung des zweiten Stützrings 12 relativ zu der radialflexiblen außenverzahnten Büchse 9 kommt.

Der zweite Stützring 12 ist über das erste Gehäuseteil 24 drehfest mit dem ersten beweglichen Träger 2 verbunden.

Der Antriebsmotor 4 beinhaltet einen Stator 13 und einen Rotor 14. Der Rotor 14 ist drehfest mit der Abtriebswelle 5 verbunden. Ein Antriebsmotorgehäuse 15 ist drehfest an dem ersten Gehäuseteil 24 befestigt. Der Stator 13 ist ortsfest in dem Antriebsmotorgehäuse 15 angeordnet.

Mittels des Antriebsmotors 4 kann das Antriebselement 7 in Rotation versetzt werden, was zu einer Relativdrehung des mit dem ersten Träger 2 verbundenen zweiten Stützrings 12 führt, so dass sich der erste Träger 2 und der zweite Träger 3 relativ zueinander bewegen.

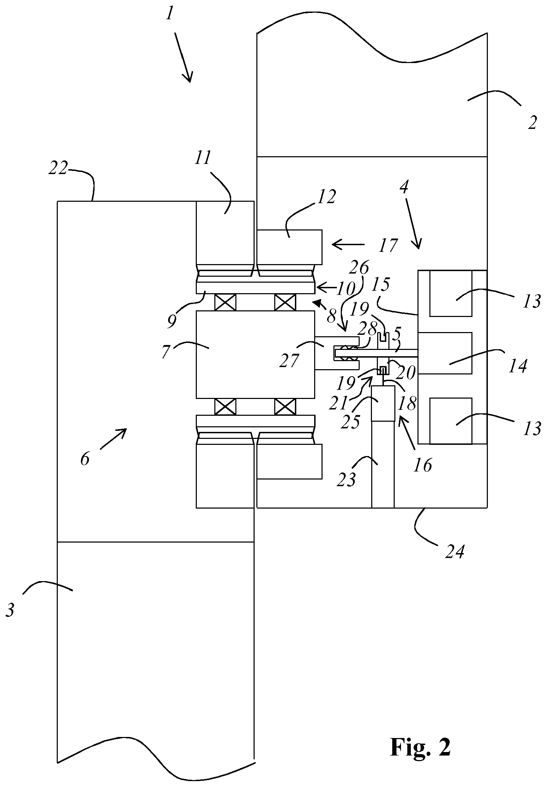

Figur 2 zeigt ein zweites Ausführungsbeispiel eines motorisierten Gelenks 1 zum gelenkigen Verbinden eines ersten Trägers 2 mit einem zweiten Träger 3 eines programmierbaren Bewegungsautomaten.

Bei diesem Ausführungsbeispiel sind der Antriebsmotor 4 und ein Teil des Getriebes 6 sowie die Feststellvorrichtung 16 in dem ersten Gehäuseteil 24 angeordnet, während der andere Teil des Getriebes 6 in dem zweiten Gehäuseteil 22 angeordnet ist.

### Bezugszeichenliste:

- 1: Motorisiertes Gelenk
- 2: Erster Träger
- 3: Zweiter Träger
- 4: Antriebsmotor
- 5: Abtriebswelle
- 6: Getriebe
- 7: Antriebselement
- 8: Radialflexibles Wälzlager
- 9: Radialflexible, außenverzahnte Büchse
- 10: Zwischenelement
- 11: Erster Stützring
- 12: Zweiter Stützring
- 13: Stator
- 14: Rotor
- 15: Antriebsmotorgehäuse
- 16: Feststellvorrichtung
- 17: Abtriebselement
- 18: Sperrenstift
- 19: Rastausnehmung
- 20: Sperrmittel
- 21: Sperrring
- 22: Zweites Gehäuseteil
- 23: Halter
- 24: Erstes Gehäuseteil
- 25: Hubmagnet
- 26: Verbindungskupplung
- 27: Antriebswelle
- 28: Klemmbauteil

## Patentansprüche

1. Motorisiertes Gelenk (1) zum Verbinden von zwei relativ zueinander beweglichen Trägern (2, 3) eines programmierbaren Bewegungsautomaten, das einen Antriebsmotor und ein dem Antriebsmotor (4) triebtechnisch nachgeschaltetes Getriebe (6) sowie eine Feststellvorrichtung (16) aufweist, wobei die Feststellvorrichtung (16) dazu ausgebildet und angeordnet ist, unmittelbar eine Abtriebswelle (5) des Antriebsmotors (4) oder ein drehfest mit der Abtriebswelle (5) des Antriebsmotors (4) verbundenes Sperrmittel (20) zu arretieren und die Abtriebswelle (5) mittels einer Verbindungskupplung (26) drehfest mit einer Antriebswelle (27) des Getriebes (6) verbunden ist, wobei die Verbindungskupplung (26) bei Auftreten eines Drehmomentes zwischen der Abtriebswelle (5) des Antriebsmotors (4) und der Antriebswelle (27) des Getriebes (6) über einem vorgegebenen oder vorgebbaren Wert eine Relativbewegung der Abtriebswelle (5) zur Antriebswelle (27) zulässt, **dadurch gekennzeichnet, dass**
a. die Verbindungskupplung (26) eine stirnseitige Ausnehmung in der Abtriebswelle (5) aufweist, in der ein Ende der Antriebswelle (27) mittels eines Klemmbauteils (28), das als gewelltes und/oder elastisches und/oder zylinderförmig gebogenes Band oder als geschlitzter Ring ausgebildet ist, kraftschlüssig verankert ist, oder dass
b. die Verbindungskupplung (26) eine stirnseitige Ausnehmung in der Antriebswelle (27) aufweist, in der ein Ende der Abtriebswelle (5) mittels eines Klemmbauteils, das als gewelltes und/oder elastisches und/oder zylinderförmig gebogenes Band oder als geschlitzter Ring ausgebildet ist, kraftschlüssig verankert ist.

2. Motorisiertes Gelenk (1) nach Anspruch 1, **dadurch gekennzeichnet, dass** der vorgegebene Wert dem maximal zulässigen Betriebsdrehmoment, das zwischen der Abtriebswelle (5) des Antriebsmotors (4) und der Antriebswelle (27) des Getriebes (6) auftreten darf, entspricht und/oder dass der vorgegebene Wert derart gewählt, dass eine Beschädigung des Gelenks (1) und/oder des Getriebes (6) ausgeschlossen ist.

3. Motorisiertes Gelenk (1) nach Anspruch 1 oder 2, **dadurch gekennzeichnet, dass**
a. die drehfeste Verbindung der Abtriebswelle (5) des Antriebsmotors (4) mit dem Sperrmittel (20) eine Formschlussverbindung und/oder eine Stoffschlussverbindung ist oder dass
b. die drehfeste Verbindung der Abtriebswelle (5) des Antriebsmotors (4) mit dem Sperrmittel (20) als eine Kraftschlussverbindung ausgeführt und derart ausgebildet ist, dass die Verbindungskupplung (26) die Relativbewegung der Abtriebswelle (5) zur Antriebswelle (27) zulässt, bevor es zu einem Durchrutschen der Kraftschlussverbindung kommt.

4. Motorisiertes Gelenk (1) nach einem der Ansprüche 1 bis 3, **dadurch gekennzeichnet, dass**
a. die Abtriebswelle (5) des Antriebsmotors (4) und das Sperrmittel (20) koaxial zueinander angeordnet sind, und/oder dass
b. die Abtriebswelle (5) des Antriebsmotors (4) und der Antriebswelle (27) des Getriebes (6) koaxial zueinander angeordnet sind.

5. Motorisiertes Gelenk (1) nach einem der Ansprüche 1 bis 4, **dadurch gekennzeichnet, dass** die Abtriebswelle (5) oder das drehfest mit der Abtriebswelle (5) verbundene Sperrmittel (20) wenigstens ein Formschlussmittel aufweist, das im zugeschalteten Zustand der Feststellvorrichtung (16) formschlüssig mit einem relativ zu einem Gehäuse oder einem Chassis drehfesten Gegenformschlussmittel zusammen wirkt.

6. Motorisiertes Gelenk (1) nach Anspruch 5, **dadurch gekennzeichnet, dass** die Abtriebswelle (5) oder das drehfest mit der Abtriebswelle (5) verbundene Bauteil mehrere Formschlussmittel, insbesondere mehrere Rastausnehmungen (19), aufweist, die derart angeordnet sind, dass ein Eingreifen des Gegensperrmittels in unterschiedlichen Drehstellungen der Abtriebswelle (5) ermöglicht ist.

7. Motorisiertes Gelenk (1) nach Anspruch 5 oder 6, **dadurch gekennzeichnet, dass** das Formschlussmittel als wenigstens eine Rastausnehmung (19) oder als radial ausgerichtete Rastausnehmung (19) ausgebildet ist und dass das Gegenformschlussmittel einen radial bewegbaren Sperrenstift (18) aufweist, dessen freies Ende in zugeschaltetem Zustand der Feststellvorrichtung (16) in eine Rastausnehmung (19) des Formschlussmittels eingreift.

8. Motorisiertes Gelenk (1) nach einem der Ansprüche 1 bis 7, **dadurch gekennzeichnet, dass** das Getriebe (6) als Spannungswellengetriebe ausgebildet ist.

9. Motorisiertes Gelenk (1) nach Anspruch 8, **dadurch gekennzeichnet, dass** das Spannungswellengetriebe als Topfgetriebe ausgebildet ist oder dass das Spannungswellengetriebe als Ringgetriebe ausgebildet ist.

10. Motorisiertes Gelenk (1) nach einem der Ansprüche 1 bis 9, **dadurch gekennzeichnet, dass** das Gelenk (1) zwei relativ zueinander bewegliche Gehäuseteile (22, 24) aufweist, wobei
a. der Antriebsmotor (4) in einem der Gehäuseteile (22, 24) angeordnet ist und das Getriebe (6) in dem anderen Gehäuseteil (22, 24) angeordnet ist, oder dass
b. ein Teil des Getriebes (6) in einem der Gehäuseteile (22, 24) angeordnet ist und ein anderer Teil des Getriebes (6) in dem anderen Gehäuseteil (22, 24) angeordnet ist, oder dass
c. das Getriebe (6) oder ein Teil des Getriebes (6) in einem der Gehäuseteile (22, 24) angeordnet ist und die Feststellvorrichtung (16) in dem anderen Gehäuseteil (22, 24) angeordnet ist.

11. Motorisiertes Gelenk (1) nach einem der Ansprüche 1 bis 10, **dadurch gekennzeichnet, dass**
a. das Gelenk (1) dazu ausgebildet ist, zwei Träger (2, 3) derart zu verbinden, dass die Ebene, in der sich einer der Träger (2, 3) bewegt, und die Ebene, in der sich der andere Träger (2, 3) bewegt, stets parallel zueinander angeordnet sind, oder dass
b. das Gelenk (1) als Scharniergelenk ausgebildet ist. oder dass
c. das Gelenk (1) dazu ausgebildet ist, zwei Träger (2, 3) derart zu verbinden, dass die Ebene, in der sich einer der Träger (2, 3) bewegt, stets senkrecht zu dem anderen Träger (2, 3) angeordnet ist.

12. Programmierbarer Bewegungsautomat mit zwei mittels eines motorisierten Gelenks (1) nach einem der Ansprüche 1 bis 11 relativ zueinander beweglich verbundenen Trägern (2, 3).

13. Programmierbarer Bewegungsautomat nach Anspruch 12, **dadurch gekennzeichnet, dass** einer der Träger (2, 3) direkt oder indirekt drehfest mit einem Stator (13) des Antriebsmotors (4) und/oder einem Antriebsmotorgehäuse des Antriebsmotors (4) verbunden ist und dass der andere Träger (2, 3) drehfest an ein Abtriebselement (17) des Getriebes (6) angekoppelt ist.

14. Programmierbarer Bewegungsautomat nach Anspruch 12 oder 13, **dadurch gekennzeichnet, dass** die zwei mittels des motorisierten Gelenks (1) beweglich verbundenen Träger (2, 3) Teil eines Roboterarmes sind.

15. Programmierbarer Bewegungsautomat nach einem der Ansprüche 12 bis 14, **dadurch gekennzeichnet, dass** das Gelenk (1) zwei relativ zueinander bewegliche Gehäuseteile (22, 24) aufweist, wobei
a. einer der Träger (2, 3) mit einem der Gehäuseteile (22, 24) fest verbunden ist und der andere Träger (2, 3) mit dem anderen Gehäuseteil (22, 24) fest verbunden ist, oder wobei
b. eines der Gehäuseteile (22, 24) Bestandteil eines der Träger (2, 3) ist oder wobei
c. eines der Gehäuseteile (22, 24) Bestandteil eines Gehäuses eines der Träger (2, 3) ist und das andere Gehäuseteil (22, 24) Bestandteil eines Gehäuses des anderen Trägers (2, 3) ist.

## Claims

1. Motorized joint (1) for connecting two carriers (2, 3), movable relative to one another, of a programmable automatic moving device which comprises a drive motor, a transmission (6) which is connected downstream of the drive motor (4) in drive terms, and a locking device (16), the locking device (16) being configured and arranged to directly lock an output shaft (5) of the drive motor (4) or a locking means (20) which is connected fixedly to the output shaft (5) of the drive motor (4) for conjoint rotation, and the output shaft (5) being connected fixedly to a drive shaft (27) of the transmission (6) for conjoint rotation by means of a connecting coupling (26), the connecting coupling (26) permitting a relative movement of the output shaft (5) with respect to the drive shaft (27) in the case of the occurrence of a torque between the output shaft (5) of the drive motor (4) and the drive shaft (27) of the transmission (6) above a predefined or predefinable value, **characterized in that**
a. the connecting coupling (26) has an end-side recess in the output shaft (5), in which recess one end of the drive shaft (27) is anchored non-positively by means of a clamping component (28) which is configured as a corrugated and/or elastic and/or cylindrically curved strip or as a slotted ring, or in that
b. the connecting coupling (26) has an end-side recess in the drive shaft (27), in which recess one end of the output shaft (5) is anchored non-positively by means of a clamping component which is configured as a corrugated and/or elastic and/or cylindrically curved strip or as a slotted ring.

2. Motorized joint (1) according to Claim 1, **characterized in that** the predefined value corresponds to the maximum permissible operating torque which may occur between the output shaft (5) of the drive motor (4) and the drive shaft (27) of the transmission (6), and/or in that the predefined value is selected in such a way that damage of the joint (1) and/or of the transmission (6) is ruled out.

3. Motorized joint (1) according to Claim 1 or 2, **characterized in that**
a. the fixed connection of the output shaft (5) of the drive motor (4) to the locking means (20) for conjoint rotation is a positively locking connection and/or an integrally joined connection, or **in that**
b. the fixed connection of the output shaft (5) of the drive motor (4) to the locking means (20) for conjoint rotation is designed as a non-positive connection and is configured in such a way that the connecting coupling (26) permits the relative movement of the output shaft (5) with respect to the drive shaft (27) before slipping of the non-positive connection occurs.

4. Motorized joint (1) according to one of Claims 1 to 3, **characterized in that**
a. the output shaft (5) of the drive motor (4) and the locking means (20) are arranged coaxially with respect to one another, and/or **in that**
b. the output shaft (5) of the drive motor (4) and the drive shaft (27) of the transmission (6) are arranged coaxially with respect to one another.

5. Motorized joint (1) according to one of Claims 1 to 4, **characterized in that** the output shaft (5) or the locking means (20) which is connected fixedly to the output shaft (5) for conjoint rotation has at least one positively locking means which, in the switched-on state of the locking device (16), interacts in a positively locking manner with a complementary positively locking means which is fixed in terms of rotation relative to a housing or a chassis.

6. Motorized joint (1) according to Claim 5, **characterized in that** the output shaft (5) or the component which is connected fixedly to the output shaft (5) for conjoint rotation comprises a plurality of positively locking means, in particular a plurality of latching recesses (19), which are arranged in such a way that engaging of the complementary locking means is made possible in different rotational positions of the output shaft (5).

7. Motorized joint (1) according to Claim 5 or 6, **characterized in that** the positively locking means is configured as at least one latching recess (19) or as a radially oriented latching recess (19), and **in that** the complementary positively locking means comprises a radially movable locking pin (18), the free end of which engages, in the switched-on state of the locking device (16), into a latching recess (19) of the positively locking means.

8. Motorized joint (1) according to one of Claims 1 to 7, **characterized in that** the transmission (6) is configured as a strain wave gear mechanism.

9. Motorized joint (1) according to Claim 8, **characterized in that** the strain wave gear mechanism is configured as a cup-type gear mechanism, or **in that** the strain wave gear mechanism is configured as a ring gear mechanism.

10. Motorized joint (1) according to one of Claims 1 to 9, **characterized in that** the joint (1) comprises two housing parts (22, 24) which are movable relative to one another,
a. the drive motor (4) being arranged in one of the housing parts (22, 24), and the transmission (6) being arranged in the other housing part (22, 24), or **in that**
b. one part of the transmission (6) is arranged in one of the housing parts (22, 24), and another part of the transmission (6) is arranged in the other housing part (22, 24), or **in that**
c. the transmission (6) or a part of the transmission (6) is arranged in one of the housing parts (22, 24), and the locking device (16) is arranged in the other housing part (22, 24).

11. Motorized joint (1) according to one of Claims 1 to 10, **characterized in that**
a. the joint (1) is configured to connect two carriers (2, 3) in such a way that the plane, in which one of the carriers (2, 3) moves, and the plane, in which the other carrier (2, 3) moves, are always arranged parallel to one another, or **in that**
b. the joint (1) is configured as a hinged joint, or in that
c. the joint (1) is configured to connect two carriers (2, 3) in such a way that the plane, in which one of the carriers (2, 3) moves, is always arranged perpendicularly with respect to the other carrier (2, 3).

12. Programmable automatic moving device with two carriers (2, 3) which are connected movably relative to one another by means of a motorized joint (1) according to one of Claims 1 to 11.

13. Programmable automatic moving device according to Claim 12, **characterized in that** one of the carriers (2, 3) is directly or indirectly connected fixedly to a stator (13) of the drive motor (4) and/or a drive motor housing of the drive motor (4) for conjoint rotation, and **in that** the other carrier (2, 3) is coupled fixedly to an output element (17) of the transmission (6) for conjoint rotation.

14. Programmable automatic moving device according to Claim 12 or 13, **characterized in that** the two carriers (2, 3) which are connected movably by means of the motorized joint (1) are part of a robot arm.

15. Programmable automatic moving device according to one of Claims 12 to 14, **characterized in that** the joint (1) comprises two housing parts (22, 24) which are movable relative to one another,
a. one of the carriers (2, 3) being connected fixedly to one of the housing parts (22, 24), and the other carrier (2, 3) being connected fixedly to the other housing part (22, 24), or
b. one of the housing parts (22, 24) being a constituent part of one of the carriers (2, 3), or
c. one of the housing parts (22, 24) being a constituent part of a housing of one of the carriers (2, 3), and the other housing part (22, 24) being a constituent part of a housing of the other carrier (2, 3).

## Revendications

1. Articulation motorisée (1), destinée à relier deux supports (2, 3) mobiles l'un par rapport à l'autre d'un robot manipulateur programmable, qui comprend un moteur d'entraînement (4) et une transmission (6) montée en aval du moteur d'entraînement (4) par une technique d'entraînement, ainsi qu'un dispositif d'immobilisation (16), le dispositif d'immobilisation (16) étant réalisé et disposé pour bloquer directement un arbre de sortie (5) du moteur d'entraînement (4) ou un moyen de blocage (20) relié de manière solidaire en rotation à l'arbre de sortie (5) du moteur d'entraînement (4) et l'arbre de sortie (5) étant relié de manière solidaire en rotation à un arbre d'entraînement (27) de la transmission (6) au moyen d'un accouplement de liaison (26), l'accouplement de liaison (26), en cas d'apparition d'un couple entre l'arbre de sortie (5) du moteur d'entraînement (4) et l'arbre d'entraînement (27) de la transmission (6) au-delà d'une valeur prédéfinie ou pouvant être prédéfinie, autorisant un mouvement relatif de l'arbre de sortie (5) par rapport à l'arbre d'entrée (27), **caractérisée en ce que**
a. l'accouplement de liaison (26) comprend un évidement frontal dans l'arbre de sortie (5), évidement dans lequel est ancrée à force une extrémité de l'arbre d'entraînement (27) au moyen d'un composant de serrage (28) qui est réalisé sous forme de bande ondulée et/ou élastique et/ou courbée de manière cylindrique ou sous forme de bague fendue, ou **en ce que**
b. l'accouplement de liaison (26) comprend un évidement frontal dans l'arbre d'entraînement (27), évidement dans lequel est ancrée à force une extrémité de l'arbre de sortie (5) au moyen d'un composant de serrage (28) qui est réalisé sous forme de bande ondulée et/ou élastique et/ou courbée de manière cylindrique ou sous forme de bague fendue.

2. Articulation motorisée (1) selon la revendication 1, **caractérisée en ce que** la valeur prédéfinie correspond au couple de fonctionnement maximal admissible qui peut se produire entre l'arbre de sortie (5) du moteur d'entraînement (4) et l'arbre d'entraînement (27) de la transmission (6) et/ou **en ce que** la valeur prédéfinie est sélectionnée de telle sorte qu'un endommagement de l'articulation (1) et/ou de la transmission (6) soit exclu.

3. Articulation motorisée (1) selon la revendication 1 ou 2, **caractérisée en ce que**
a. la liaison solidaire en rotation de l'arbre de sortie (5) du moteur d'entraînement (4) au moyen de blocage (20) est une liaison par complémentarité de formes et/ou une liaison de matière ou **en ce que**
b. la liaison solidaire en rotation de l'arbre de sortie (5) du moteur d'entraînement (4) au moyen de blocage (20) est conçue sous la forme d'une liaison à force et est réalisée de telle sorte que l'accouplement de liaison (26) autorise le mouvement relatif de l'arbre de sortie (5) par rapport à l'arbre d'entraînement (27) avant qu'un glissement de la liaison à force ne se produise.

4. Articulation motorisée (1) selon l'une des revendications 1 à 3, **caractérisée en ce que**
a. l'arbre de sortie (5) du moteur d'entraînement (4) et le moyen de blocage (20) sont disposés coaxialement l'un par rapport à l'autre, et/ou **en ce que**
b. l'arbre de sortie (5) du moteur d'entraînement (4) et l'arbre d'entraînement (27) de la transmission (6) sont disposés coaxialement l'un par rapport à l'autre.

5. Articulation motorisée (1) selon l'une des revendications 1 à 4, **caractérisée en ce que** l'arbre de sortie (5) ou le moyen de blocage (20) relié de manière solidaire en rotation à l'arbre de sortie (5) comprend au moins un moyen d'engagement par complémentarité de formes qui, dans l'état enclenché du dispositif d'immobilisation (16), coopère par complémentarité de formes avec un moyen d'engagement par complémentarité de formes conjugué solidaire en rotation d'un carter ou d'un châssis.

6. Articulation motorisée (1) selon la revendication 5, **caractérisée en ce que** l'arbre de sortie (5) ou le composant relié de manière solidaire en rotation à l'arbre de sortie (5) comprend plusieurs moyens d'engagement par complémentarité de formes, en particulier plusieurs évidements d'encliquetage (19), qui sont disposés de telle sorte qu'une entrée en prise du moyen d'engagement par complémentarité de formes conjugué dans différentes positions de rotation de l'arbre de sortie (5) soit rendue possible.

7. Articulation motorisée (1) selon la revendication 5 ou 6, **caractérisée en ce que** le moyen d'engagement par complémentarité de formes est réalisé sous la forme d'au moins un évidement d'encliquetage (19) ou sous la forme d'un évidement d'encliquetage (19) orienté radialement et **en ce que** le moyen d'engagement par complémentarité de formes conjugué comprend une tige de blocage (18) déplaçable radialement, dont l'extrémité libre s'engage dans un évidement d'encliquetage (19) du moyen d'engagement par complémentarité de formes, lorsque le dispositif d'immobilisation (16) est dans l'état enclenché.

8. Articulation motorisée (1) selon l'une des revendications 1 à 7, **caractérisée en ce que** la transmission (6) est réalisée sous forme de transmission harmonique.

9. Articulation motorisée (1) selon la revendication 8, **caractérisée en ce que** la transmission harmonique est réalisée sous forme de transmission en pot ou **en ce que** la transmission harmonique est réalisée sous forme de transmission annulaire.

10. Articulation motorisée (1) selon l'une des revendications 1 à 9, **caractérisée en ce que** l'articulation (1) comprend deux parties de carter (22, 24) mobiles l'une par rapport à l'autre,
a. le moteur d'entraînement (4) étant disposé dans l'une des parties de carter (22, 24) et la transmission (6) étant disposée dans l'autre partie de carter (22, 24), ou **en ce**
b. **qu'**une partie de la transmission (6) est disposée dans l'une des parties de carter (22, 24) et une autre partie de la transmission (6) est disposée dans l'autre partie de carter (22, 24), ou **en ce que**
c. la transmission (6) ou une partie de la transmission (6) est disposée dans l'une des parties de carter (22, 24) et le dispositif d'immobilisation (16) est disposé dans l'autre partie de carter (22, 24).

11. Articulation motorisée (1) selon l'une des revendications 1 à 10, **caractérisée en ce que**
a. l'articulation (1) est réalisée pour relier deux supports (2, 3), de telle sorte que le plan dans lequel se déplace l'un des supports (2, 3) et le plan dans lequel se déplace l'autre support (2, 3) soient toujours disposés parallèlement l'un à l'autre, ou **en ce que**
b. l'articulation (1) est réalisée sous forme d'articulation à charnière, ou **en ce que**
c. l'articulation (1) est réalisée pour relier deux supports (2, 3), de telle sorte que le plan dans lequel se déplace l'un des supports (2, 3) soit toujours disposé perpendiculairement à l'autre support (2, 3).

12. Robot manipulateur programmable, pourvu de deux supports (2, 3) reliés de manière mobile l'un par rapport à l'autre au moyen d'une articulation motorisée (1) selon l'une quelconque des revendications 1 à 11.

13. Robot manipulateur programmable selon la revendication 12, **caractérisé en ce que** l'un des supports (2, 3) est relié directement ou indirectement de manière solidaire en rotation à un stator (13) du moteur d'entraînement (4) et/ou à un carter de moteur d'entraînement du moteur d'entraînement (4) et **en ce que** l'autre support (2, 3) est accouplé de manière solidaire en rotation à un élément de sortie (17) de la transmission (6) .

14. Robot manipulateur programmable selon la revendication 12 ou 13, **caractérisé en ce que** les deux supports (2, 3) reliés de manière mobile au moyen de l'articulation motorisée (1) font partie d'un bras de robot.

15. Robot manipulateur programmable selon l'une des revendications 12 à 14, **caractérisé en ce que** l'articulation (1) comporte deux parties de carter (22, 24) mobiles l'une par rapport à l'autre,
a. l'un des supports (2, 3) étant fixement relié à l'une des parties de carter (22, 24) et l'autre support (2, 3) étant fixement relié à l'autre partie de carter (22, 24), ou
b. l'une des parties de carter (22, 24) étant un élément constitutif de l'un des supports (2, 3), ou
c. l'une des parties de carter (22, 24) étant un élément constitutif d'un carter de l'un des supports (2, 3) et l'autre partie de carter (22, 24) étant un élément constitutif d'un carter de l'autre support (2, 3).
